# EUROPEAN PATENT APPLICATION

(11) **EP 2 887 615 A1**
(43) Date of publication of application: **24.06.2015**
(21) Application number: 14199875.7
(22) Date of filing: 22.12.2014
(51) Int. Cl.: H04L 29/06

(54) **Cloud-based scalable authentication for electronic devices**

(30) Priority: 23.12.2013 US 201314139625
(71) Applicant: Samsung Electronics Co., Ltd, Gyeonggi-do 443-742 (KR)
(72) Inventor: Verma, Sanjeev, Richardson, TX Texas 75082 (US)
(74) Representative: Gover, Richard Paul

(57) **Abstract**

A method registers one or more electronic devices for a client account for a relying party with an authenticator. A request for access to one or more services for the client account is sent by a particular electronic device to the relying party. A request for authentication is sent from the relying party to the particular electronic device. The request for authentication is redirected to the authenticator. A signed response corresponding to the relying party is generated by the authenticator in response to the request for authentication. The signed response is forwarded to the relying party. Access to one or more requested services is granted.

## Description

### TECHNICAL FIELD

One or more embodiments generally relate to cloud-based authentication for electronic devices, in particular, to electronic devices using cloud-based generation and storage of authentication information used between one or more electronic devices and a set of websites.

### BACKGROUND

In order for a mobile device to access website services, the device or user needs to be authenticated. Typical authentication may include using a login or password. Since a user may have accounts on many websites, it may be impossible for a user to choose and use many different distinct passwords. Additionally, since users may use a same password for multiple websites, device verification/authentication may also be required.

### SUMMARY

One or more embodiments generally relate to authenticating an electronic device for access to services using an authenticator. In one embodiment, a method registers one or more electronic devices for a client account for a relying party with an authenticator. In one embodiment, a request for access to one or more services for the client account is sent by a particular electronic device to the relying party. In one embodiment, a request for authentication is sent from the relying party to the particular electronic device. In one embodiment, the request for authentication is redirected to the authenticator. In one embodiment, a signed response corresponding to the relying party is generated by the authenticator in response to the request for authentication. In one embodiment, the signed response is forwarded to the relying party, and access to one or more requested services is granted.

In one embodiment, a system comprises an authenticator and an electronic device including a secure storage module. In one embodiment, the electronic device registers for a client account for a relying party with the authenticator, sends a request for access to one or more services for the client account to the relying party, and redirects a request for authentication to the cloud-based authenticator. In one embodiment, the authenticator generates a signed response corresponding to the relying party in response to the request for authentication, and forwards the signed response to the relying party for the electronic device obtaining access to the one or more requested services.

In one embodiment a non-transitory computer-readable medium having instructions which when executed on a computer perform a method comprises registering one or more electronic devices for a client account for a relying party with an authenticator. In one embodiment, a request for access to one or more services for the client account is sent by a particular electronic device to the relying party. In one embodiment, a request for authentication from the relying party is sent to the particular electronic device. In one embodiment, the request for authentication is redirected to the authenticator. In one embodiment, a signed response corresponding to the relying party is generated by the authenticator in response to the request for authentication. In one embodiment, the signed response is forwarded to the relying party, and access to one or more requested services is granted.

These and other aspects and advantages of one or more embodiments will become apparent from the following detailed description, which, when taken in conjunction with the drawings, illustrate by way of example the principles of the one or more embodiments.

### BRIEF DESCRIPTION OF THE DRAWINGS

For a fuller understanding of the nature and advantages of the embodiments, as well as a preferred mode of use, reference should be made to the following detailed description read in conjunction with the accompanying drawings, in which:
FIG. 1 shows a schematic view of a communications system, according to an embodiment.
FIG. 2 shows a block diagram of an architecture for a system including cloud-based authentication, according to an embodiment.
FIG. 3 shows an example of an authenticator for a scalable authentication mechanism system, according to an embodiment.
FIG. 4 shows an example of a number of electronic devices for a user may be bound to a client account at an authenticator, according to an embodiment.
FIG. 5 shows an example credential table for an electronic device, according to an embodiment.
FIG. 6 shows use of a browser processing element used in a scalable authentication mechanism, according to an embodiment.
FIG. 7 shows a block diagram of a cloud-based authentication mechanism, according to an embodiment.
FIG. 8 shows a message exchange protocol for a cloud-based authentication mechanism, according to an embodiment.
FIG. 9 shows a flowchart of an authenticator based authentication process, according to an embodiment.
FIG. 10 is a high-level block diagram showing an information processing system comprising a computing system implementing an embodiment.

### DETAILED DESCRIPTION

The following description is made for the purpose of illustrating the general principles of one or more embodiments and is not meant to limit the inventive concepts claimed herein. Further, particular features described herein can be used in combination with other described features in each of the various possible combinations and permutations. Unless otherwise specifically defined herein, all terms are to be given their broadest possible interpretation including meanings implied from the specification as well as meanings understood by those skilled in the art and/or as defined in dictionaries, treatises, etc.

One or more embodiments generally relate to authenticating an electronic device for access to services using an authenticator, such as a cloud-based authenticator. In one embodiment, a method registers one or more electronic devices for a client account for a relying party with an authenticator. In one embodiment, a request for access to one or more services for the client account is sent by a particular electronic device to the relying party. In one embodiment, a request for authentication is sent from the relying party to the particular electronic device. In one embodiment, the request for authentication is redirected to the authenticator. In one embodiment, a signed response corresponding to the relying party is generated by the authenticator in response to the request for authentication. In one embodiment, the signed response is forwarded to the relying party, and access to one or more requested services is granted.

In one embodiment, a system comprises an authenticator and an electronic device including a secure storage module. In one embodiment, the electronic device registers for a client account for a relying party with the authenticator, sends a request for access to one or more services for the client account to the relying party, and redirects a request for authentication to the cloud-based authenticator. In one embodiment, the authenticator generates a signed response corresponding to the relying party in response to the request for authentication, and forwards the signed response to the relying party for the electronic device obtaining access to the one or more requested services.

One or more embodiments comprise a mechanism that uses a cloud environment to accomplish a scalable authentication solution. In one embodiment, the cloud environment is used as a source to generate and store public/private key pairs between a given electronic device and a set of web-sites. In one example embodiment, a user need not remember the passwords for a large number of websites and also there is no need for user to carry a hardware authenticator. Also, the cloud-based authenticator may be used across a number of electronic devices owned by a user.

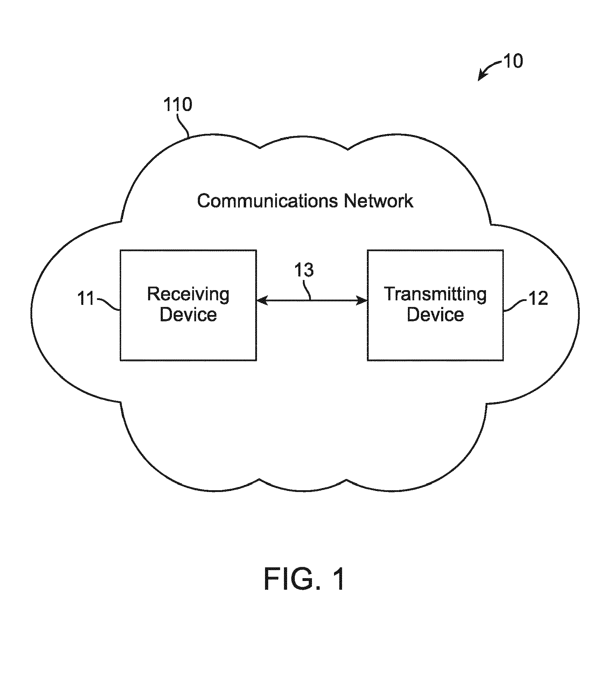

FIG. 1 is a schematic view of a communications system in accordance with one embodiment. Communications system 10 may include a communications device that initiates an outgoing communications operation (transmitting device 12) and communications network 110, which transmitting device 12 may use to initiate and conduct communications operations with other communications devices within communications network 110. For example, communications system 10 may include a communication device that receives the communications operation from the transmitting device 12 (receiving device 11). Although communications system 10 may include several transmitting devices 12 and receiving devices 11, only one of each is shown in FIG. 1 to simplify the drawing.

Any suitable circuitry, device, system or combination of these (e.g., a wireless communications infrastructure including communications towers and telecommunications servers) operative to create a communications network may be used to create communications network 110. Communications network 110 may be capable of providing communications using any suitable communications protocol. In some embodiments, communications network 110 may support, for example, traditional telephone lines, cable television, Wi-Fi (e.g., a 802.11 protocol), Bluetooth^{®}, high frequency systems (e.g., 900 MHz, 2.4 GHz, and 5.6 GHz communication systems), infrared, other relatively localized wireless communication protocol, or any combination thereof. In some embodiments, communications network 110 may support protocols used by wireless and cellular phones and personal email devices (e.g., a Blackberry®). Such protocols can include, for example, GSM, GSM plus EDGE, CDMA, quadband, and other cellular protocols. In another example, a long range communications protocol can include Wi-Fi and protocols for placing or receiving calls using VOIP or LAN. Transmitting device 12 and receiving device 11, when located within communications network 110, may communicate over a bidirectional communication path such as path 13. Both transmitting device 1 2 and receiving device 11 may be capable of initiating a communications operation and receiving an initiated communications operation.

Transmitting device 12 and receiving device 11 may include any suitable device for sending and receiving communications operations. For example, transmitting device 12 and receiving device 11 may include a mobile telephone devices, television systems, cameras, camcorders, a device with audio video capabilities, tablets, wearable devices, and any other device capable of communicating wirelessly (with or without the aid of a wireless enabling accessory system) or via wired pathways (e.g., using traditional telephone wires). The communications operations may include any suitable form of communications, including for example, voice communications (e.g., telephone calls), data communications (e.g., e-mails, text messages, media messages), or combinations of these (e.g., video conferences).

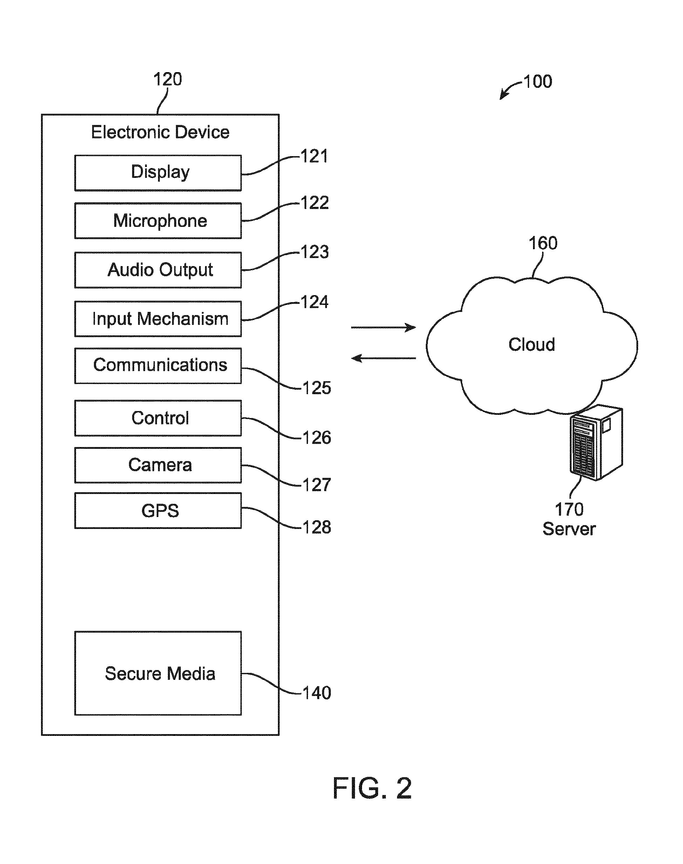

FIG. 2 shows a functional block diagram of an architecture system 100 that may be used for authentication and authorization of an electronic device 120, according to an embodiment. Both transmitting device 12 and receiving device 11 may include some or all of the features of electronics device 120. In one embodiment, the electronic device 120 may comprise a display 121, a microphone 122, audio output 123, input mechanism 124, communications circuitry 125, control circuitry 126, camera module 127, a GPS module 128 and a secure media (module or device) 140, and any other suitable components. In one embodiment, authentication and authorization credentials (e.g., tokens, security assertion markup language (SAML) assertions, etc.) are provided to the secure media 140 by an authorization or authentication server 170 (e.g., an authenticator) of a cloud environment 160 (e.g., a CE Manufacturer cloud, cloud hub, etc.).

In one example embodiment, the types of environments that may make up the security framework within the electronic device 120 and the secure media 140 may comprise a Rich Operating System (Rich OS), TEE and a Secure Element (SE), or any combination. In one example, the Rich OS is an environment created for versatility and richness where device applications are executed. In one example, the Rich OS is open to third party download after the electronic device 120 is manufactured. The SE is comprised of software and tamper resistant hardware. In one example, the SE allows high levels of security and may even work in tandem with the TEE. In one example, the SE is mandatory for hosting proximity payment applications or official electronic signatures where the highest level of security is required. The TEE may also offer a trusted user interface to securely transmit credentials, such as a personal identification number (PIN). The TEE may also filter access to applications stored directly on the SE.

In one embodiment, the authorization server 170 may comprise a TEE. In one example embodiment, the TEE provides a level of protection against software attacks, generated in a rich Operating System (OS) environment of the authorization server 170. In one example, the TEE assists in the control of access rights and houses sensitive applications, which need to be isolated from a Rich OS. In one example, the TEE is a secure area that resides in the main processor of the authorization server 170, and/or the secure media 140, and ensures that sensitive data is stored, processed and protected in a trusted environment. The TEE provides the ability of safe execution of authorized security software (e.g., trusted applications), and provides end-to-end security by enforcing protection, confidentiality, integrity and data access rights. In one example, the TEE is an isolated environment that runs in parallel with the Rich OS, providing security services to the rich environment. In one example, the TEE is more secure than the Rich OS, but not as secure as the SE. In one example, the TEE therefore offers a secure 'middle ground' between the high protection of the SE and the lower protection of the Rich OS.

In one embodiment, all of the applications employed by audio output 123, display 121, input mechanism 124, communications circuitry 125 and microphone 122 may be interconnected and managed by control circuitry 126. In one example, a hand held music/video player capable of transmitting music/video to other tuning devices may be incorporated into the electronics device 120.

In one embodiment, audio output 123 may include any suitable audio component for providing audio to the user of electronics device 120. For example, audio output 123 may include one or more speakers (e.g., mono or stereo speakers) built into electronics device 120. In some embodiments, audio output 123 may include an audio component that is remotely coupled to electronics device 120. For example, audio output 123 may include a headset, headphones or earbuds that may be coupled to communications device with a wire (e.g., coupled to electronics device 120 with a jack) or wirelessly (e.g., Bluetooth^{®} headphones or a Bluetooth^{®} headset).

In one embodiment, display 121 may include any suitable screen or projection system for providing a display visible to the user. For example, display 121 may include a screen (e.g., an LCD screen) that is incorporated in electronics device 120. As another example, display 121 may include a movable display or a projecting system for providing a display of content on a surface remote from electronics device 120 (e.g., a video projector). Display 121 may be operative to display content (e.g., information regarding communications operations or information regarding available media selections) under the direction of control circuitry 126.

In one embodiment, input mechanism 124 may be any suitable mechanism or user interface for providing user inputs or instructions to electronics device 120. Input mechanism 124 may take a variety of forms, such as a button, keypad, dial, a click wheel, or a touch screen. The input mechanism 124 may include a multi-touch screen.

In one embodiment, communications circuitry 125 may be any suitable communications circuitry operative to connect to a communications network (e.g., communications network 110, FIG. 1) and to transmit communications operations and media from the electronics device 120 to other devices within the communications network. Communications circuitry 125 may be operative to interface with the communications network using any suitable communications protocol such as, for example, Wi-Fi (e.g., a 802.11 protocol), Bluetooth^{®}, high frequency systems (e.g., 900 MHz, 2.4 GHz, and 5.6 GHz communication systems), infrared, GSM, GSM plus EDGE, CDMA, quadband, and other cellular protocols, VOIP, or any other suitable protocol.

In some embodiments, communications circuitry 125 may be operative to create a communications network using any suitable communications protocol. For example, communications circuitry 125 may create a short-range communications network using a short-range communications protocol to connect to other communications devices. For example, communications circuitry 125 may be operative to create a local communications network using the Bluetooth^{®} protocol to couple the electronics device 120 with a Bluetooth^{®} headset.

In one embodiment, control circuitry 12 6 may be operative to control the operations and performance of the electronics device 120. Control circuitry 126 may include, for example, a processor, a bus (e.g., for sending instructions to the other components of the electronics device 120), memory, storage, or any other suitable component for controlling the operations of the electronics device 120. In some embodiments, a processor may drive the display and process inputs received from the user interface. The memory and storage may include, for example, cache, Flash memory, ROM, and/or RAM. In some embodiments, memory may be specifically dedicated to storing firmware (e.g., for device applications such as an operating system, user interface functions, and processor functions). In some embodiments, memory may be operative to store information related to other devices with which the electronics device 120 performs communications operations (e.g., saving contact information related to communications operations or storing information related to different media types and media items selected by the user).

In one embodiment, the control circuitry 126 may be operative to perform the operations of one or more applications implemented on the electronics device 1 20. Any suitable number or type of applications may be implemented. Although the following discussion will enumerate different applications, it will be understood that some or all of the applications may be combined into one or more applications. For example, the electronics device 120 may include an automatic speech recognition (ASR) application, a dialog application, a map application, a media application (e.g., QuickTime, MobileMusic.app, or MobileVideo.app), social networking applications (e.g., Facebook^{®}, Twitter^{®}, Etc.), an Internet browsing application, etc. In some embodiments, the electronics device 120 may include one or several applications operative to perform communications operations. For example, the electronics device 120 may include a messaging application, a mail application, a voicemail application, an instant messaging application (e.g., for chatting), a videoconferencing application, a fax application, or any other suitable application for performing any suitable communications operation.

In some embodiments, the electronics device 120 may include microphone 122. For example, electronics device 120 may include microphone 122 to allow the user to transmit audio (e.g., voice audio) for speech control and navigation of applications 1-N 127, during a communications operation or as a means of establishing a communications operation or as an alternate to using a physical user interface. Microphone 122 may be incorporated in electronics device 120, or may be remotely coupled to the electronics device 120. For example, microphone 122 may be incorporated in wired headphones, microphone 1 22 may be incorporated in a wireless headset, may be incorporated in a remote control device, etc.

In one embodiment, the camera module 127 comprises a camera device that includes functionality for capturing still and video images, editing functionality, communication interoperability for sending, sharing, etc. photos/videos, etc.

In one embodiment, the electronics device 120 may include any other component suitable for performing a communications operation. For example, the electronics device 120 may include a power supply, ports or interfaces for coupling to a host device, a secondary input mechanism (e.g., an ON/OFF switch), or any other suitable component.

In one embodiment, the secure media 140 may be embedded (e.g., memory device) in the electronic device 120 or be removable from the electronic device 120 (e.g., a removable card, removable memory device, etc.). In one embodiment, the secure media 140 acts/provides one or more security tokens for storing all the credentials that an electronic device 120 user needs to for using the authorization server 170 as an authenticator for access of various cloud based services offered by different responsible parties/websites in. In one embodiment, the authorization server 170 installs authentication/authorization credentials or elements (e.g., tokens) in the secure media 140.

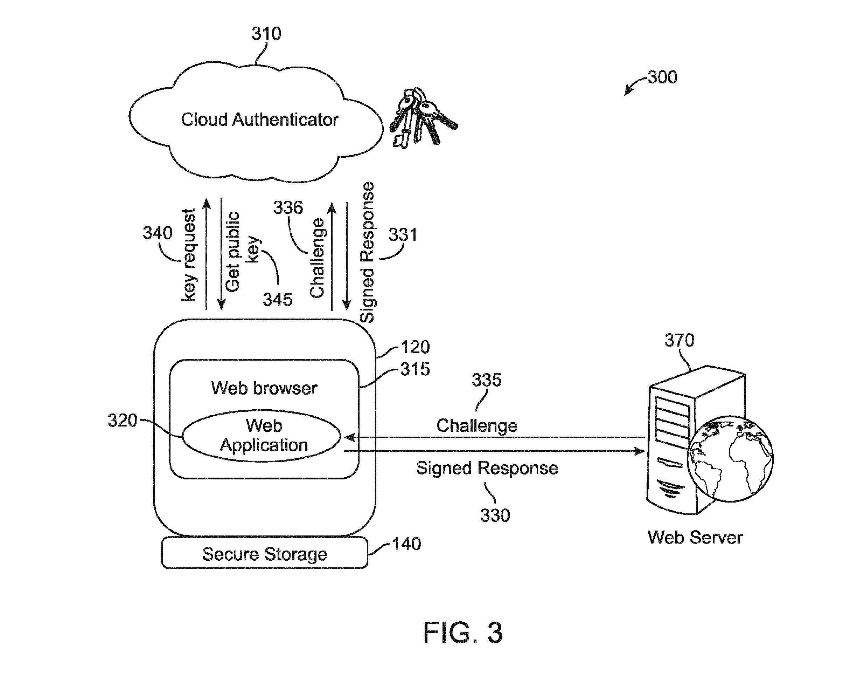

FIG. 3 shows an example of an authenticator 310 for a scalable authentication mechanism system 300, according to an embodiment. In one embodiment, system 300 includes the authenticator 310 (e.g., a cloud-based authenticator or authenticator that runs/executes in a TEE), a web server 370 and an electronic device 120. In one embodiment, the electronic device 120 includes a web browser 315 that runs a web application 320. In one embodiment, the cloud based authenticator or authenticator that runs/executes in a TEE 310 manages the identification tokens (e.g., unique identifiers) associated with one or more user accounts at various websites (or relying party (RP)). In one embodiment, once users are connected to the account, the identification tokens are transparently presented (e.g., pulled from the cloud authenticator 310 from the cloud environment) as identifiers each time the corresponding account is accessed without the user needing to do anything else. In one example embodiment, the user does not need to enter (e.g., type) a password for each web-site that he/she desires to access.

In one embodiment, a new public/private key pair (e.g., One Time Password), is generated each time a user desires to access a website (e.g., from a web server 370). In one embodiment, the browser 315 accesses the cloud authenticator 310 using another credential, which may be stored in the secure storage 140 in the electronic device 120. In one embodiment, the access to the credential may be enabled through another authenticator, biometric, local user name/password, etc. In one example embodiment, the access of the credential may require support of an API (e.g., a Javascript API, etc.) in the browser 315.

In one embodiment, two factors for authentication are used: the first factor includes a cloud environment generated key pair (OTP), and the second factor includes a biometric-based local authentication, simple user name/password based local authentication, etc. In one example embodiment, a registration step or process involves the user registering the electronic device 120 with the cloud authenticator (or authenticator that runs/executes in a TEE) 310 and storing a credential in the secure storage 140 of the electronic device 120 for subsequent access. In one example embodiment, the user then registers the cloud authenticator 310 with its account at the relying party or website.

In one embodiment, web access includes use of a browser through Javascipt extensions (or Plug-in) that informs the website regarding the support of the cloud-based authenticator 310. In one example embodiment, on subsequent access to a website, a message may be displayed to the user on the electronic device 120, such as "Swipe your Finger (or some other Biometric authentication, e.g., facial recognition, retina recognition, etc.) for Cloud login," or a request for a username/password, etc. In one example embodiment, the authenticator token associated with the user account at the website is transparently presented to the website without the user having to do anything else.

One or more embodiments should not be confused with Single Sign On (SSO) mechanisms, which rely on a single Identity Provider to authenticate a user with a large number of websites that belong to a single circle of trust. In SSO mechanisms, a user is able to sign only once using a single credential. In one or more embodiments, a cloud based authenticator 310 uses an OTP mechanism to authenticate a user to a large number of websites.

In one or more embodiment, a user is able to access a website or replying party service from any geographical location provided the cloud-based authenticator 310 is accessible. In one embodiment, since a new Public/Private Key pair (OTP) is generated every time a user accesses a website, user's accounts at various websites are protected even if the cloud-based authenticator 3 1 0 is compromised (e.g., hacked). In one embodiment, a relying party or website is not required to integrate with any server as is the case in case of mechanisms, such as a fast identity online (FIDO) alliance solution. Therefore, one or more embodiments are scalable. One or more embodiments provide a mechanism using implementation of a compliant browser 315 in the electronic device 120 with minimal requirements at the relying party or website.

In one embodiment, the electronic device requests a key 340 from the cloud-based authenticator 310 and receives a public key 345 in return (from the cloud-based authenticator 310). In one example embodiment, a challenge 335 from the website or web server 370 is received by the web browser 315 and the web application 320 directs/redirects the challenge 336 to the cloud-based authenticator 310. In one example embodiment, the web-authenticator provides a signed response 331 which is either forwarded directly to the website or web server 370 (signed response 330) or indirectly through the web application 320.

One or more embodiments provide a cloud-based mechanism for authentication of a user account/electronic device 120 and do not require a user to carry a hardware token. In one or more embodiments, the cloud-based authenticator 310 comprises a trusted application that may be implemented using industry standard APIs (e.g., Global Platform) to provide secure services to a large number of electronic devices 120, which means a number of eco-systems and websites may trust the mechanism (using the cloud-based authenticator 310) for authenticating users and electronic devices 120.

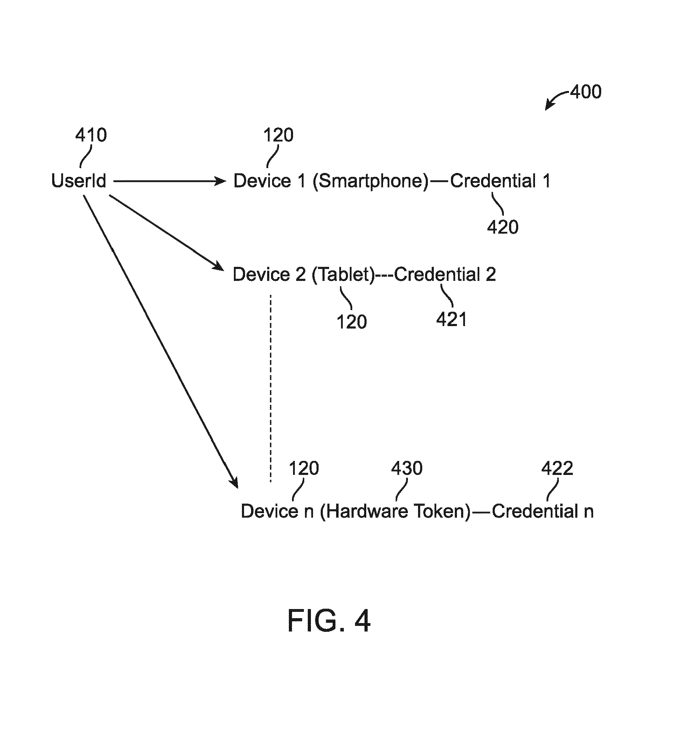

FIG. 4 shows an example 400 of a number of electronic devices 120 for a user may be bound to a client account or user ID 410 at an authenticator (e.g., cloud-based authenticator 310, FIG. 3), according to an embodiment. In one example embodiment, a user establishes a trust relationship with the cloud-based authenticator 310. In one embodiment, the trust relationship may be accomplished by registering a credential with the cloud-based authenticator 310. In one example embodiment, a user may register a number of electronic devices 120 to its account in the cloud, where different credentials (e.g., credential 1 420, credential 2 421, credential N 422) for different electronic devices 120 each register their associated credential.

In one example embodiment, the credential may comprise a hardware token 430, or other type of credential that may be used to register the specific electronic device 120. In one example embodiment, the cloud-based authenticator or authenticator that runs/executes in a TEE 310 manages Identification tokens 430 (or other unique identifiers) associated with user's accounts at various websites or website servers. In one example embodiment, once users are connected to the account, these identification tokens are transparently presented (e.g., pulled from the cloud) as identifiers each time the corresponding account is accessed without the user needing to do anything else. This will save the user from having to enter or type a password for each website that they desire to access.

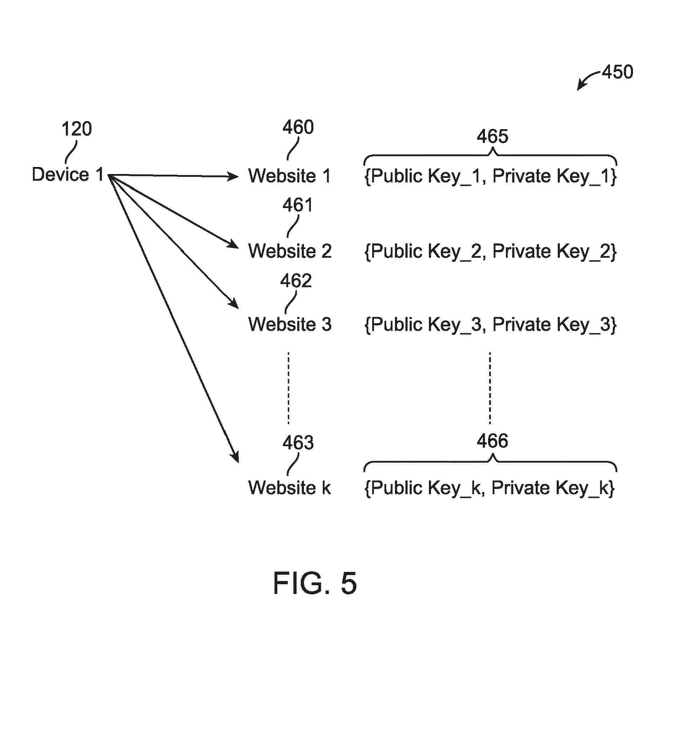

FIG. 5 shows an example credential table 450 for an electronic device 120, according to an embodiment. In one embodiment, each entry in the table 450 is indexed by the hashed identifier of the website (e.g., website 1 460, website 2 461, website 3 462, website k 463, where k is a positive integer greater than 3). In one example embodiment, similarly each key pair entry 1 465 through key pair entry k 466 is identified by the hash of the public key (e.g., public Key 1-k).

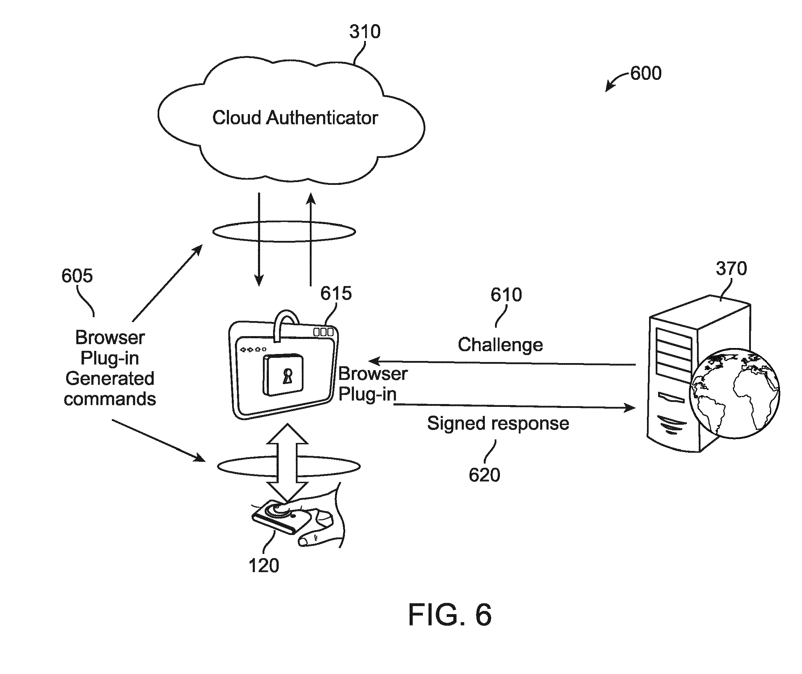

FIG. 6 shows an example 600 using a browser processing element 615 for a scalable authentication mechanism, according to an embodiment. In one embodiment, for an authentication step, the browser processing element 615 (e.g., browser extensions, such as a plug-in) are required so that the challenge 610 to a service request from the electronic device 120 is redirected by the browser using browser processing element commands 605 to the cloud-based authenticator 310 for a signed response 620 instead of sending a direct response to a website or website server 370.

In one embodiment, the browser (e.g., browser 315 using a browser application 320, FIG. 3) informs the website or website server 370 regarding the type of authenticator used by the electronic device 120 so that the website may send a particular display page to the electronic device 120. For example, website may display a message, such as "Swipe to Login" if a fingerprint sensor is being used by the electronic device 120. In another example embodiment, a website is not required to authenticate the hardware token or local authenticator being used at the electronic device 120. In one embodiment, the challenge request is sent to the cloud-based authenticator 310. In one embodiment, the cloud-based authenticator 310 generates a new public-private key pair, and then generates the signed response 620 using the generated private key (Private_k): Signed response = F (Private_k, SHA1 (UserAccountId 1 1 R 1 1 CloudURL)). In one embodiment, the website or server 370 verifies the signed response 620 using the generated public key which may be directly or indirectly delivered to the website or server 370.

In one embodiment, in the registration step, the electronic device 120 registers its cloud-based authenticator 310 at a certain website (e.g., website or server 370). In one example embodiment, the URL of the cloud-based authenticator 310 is tied to its account at a certain website: Account= {UserAccountId, CloudURL}. In one embodiment, there is no need for any credential since an OTP is generated when a service request is made to the website or server 370. In one example embodiment, the user account may be accessed by anyone of the electronic devices 120 owned by the user.

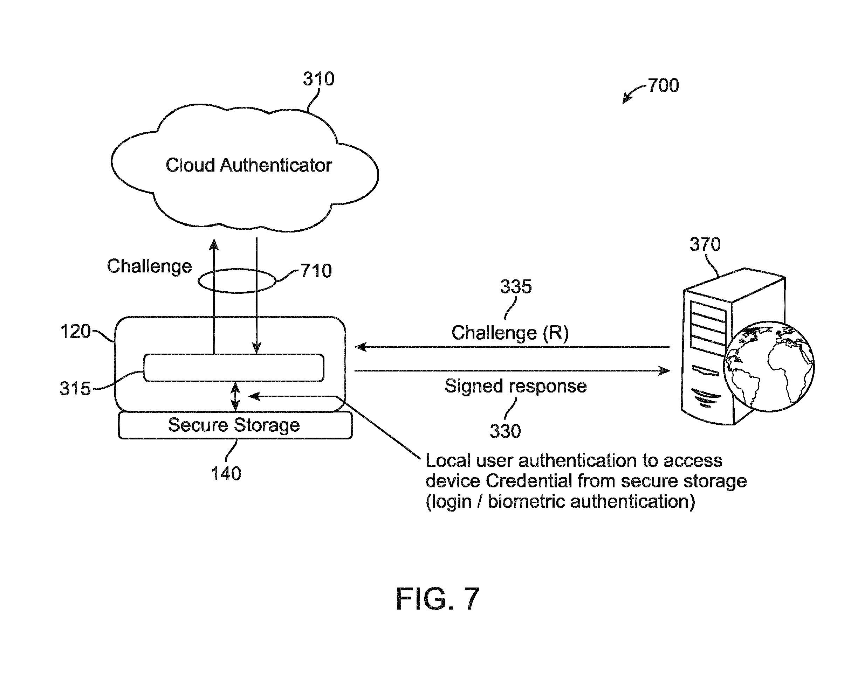

FIG. 7 shows a block diagram 700 of a cloud-based authentication mechanism, according to an embodiment. In one embodiment, the electronic device 120 first needs the user to establish a trust relationship with the cloud-based authenticator 310. In one example embodiment, establishing trust may include the electronic device(s) 120 having a credential that is registered with the cloud-based authenticator 310. In one embodiment, the authentication framework needs authentication at different levels: Website (or Relying Party), the electronic device 120 and the cloud-based authenticator 310. In one embodiment, the Website/server 370 (or RP) needs to ensure that the request for service has come from a user with a valid account at the website. Also, in one embodiment the website has to make user that the OTP has been generated by the trusted cloud-based authenticator 310 registered at the website with user's account.

In one embodiment, the electronic device 120 needs to ensure that the request for the web-service has been generated by the rightful owner of the electronic device 120. In one embodiment, the user or the rightful owner of the electronic device 120 may be authenticated using a biometric authentication, user login/password locally in the electronic device 120, etc. In one embodiment, the electronic device 120 needs to inform the website or server 370 regarding the kind of local authentication mechanism it is deploying to authenticate the user.

In one embodiment, the cloud-based authenticator 310 needs to make sure that the request for the OTP has come from an authenticated electronic device 120 and the valid user. In one embodiment, the cloud-based authenticator 310 authenticates the user using the credential presented to it at the time of the electronic device 120 registration.

One or more embodiments do not necessarily require the integration of the hardware token in the electronic device 120, and allow a user to register several electronic devices 120 to a single cloud-based account. In a hardware token (HT) based approach, a user would need a separate HT solution for each device possessed, and an infrastructure is required to support a FIDO repository and validation cache. This means that websites have to integrate FIDO servers in order for a FIDO solution to work.

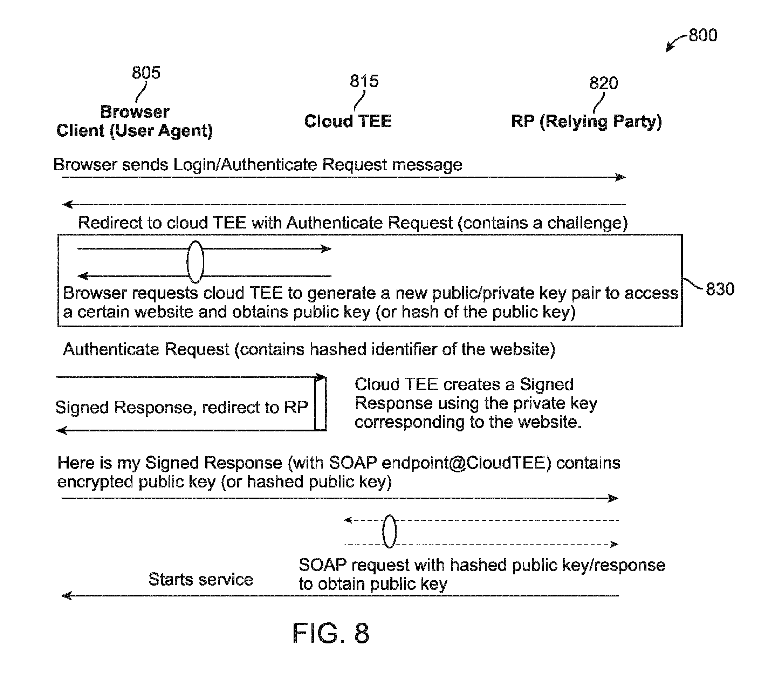

FIG. 8 shows a message exchange protocol 800 for a cloud-based authentication mechanism, according to an embodiment. In one embodiment, the transactions are shown in detail in the mechanism 800 between the browser client (user agent) 805, cloud TEE (or authenticator) 815 and an RP (or website) 820. In one embodiment, the portion 830 of the exchange protocol 800 shows the interactions between the browser plug-in or browser extension and the cloud-based authenticator or authenticator that runs/executes in a TEE 815. Both direct and indirect delivery of the public key to the RP 820 (or website) are shown according to one or more embodiments.

In one embodiment, for direct delivery of the public key, the public key is delivered encrypted to the browser plug-in, which then decrypts the public key using the credential stored in the trusted storage 140 of the electronic device 120 (FIG. 2). In one embodiment, the public key is then encrypted using the public key of the RP 820 and delivered to the RP 820 along the signed response. In one embodiment, the RP 820 then verifies the signed response using its public key. In one or more embodiments, the verification step ensures that the response is generated by the registered cloud TEE or cloud-based authenticator 815 for the user.

In one embodiment, indirect delivery includes delivery of a hash of the public key as an identifier to the RP 820. The RP 820 then obtains the public key from the cloud TEE 815 (cloud-based authenticator) by sending an explicit request for the public key identified by the key identifier.

In one or more embodiments, a particular or selected life-time period may be associated with the public/private key pair and the credential may be securely stored in the electronic device 120 using the browser client 805, which eliminates an extra round-trip to the cloud TEE 815. In one example embodiment, the browser client 805 may itself generate the public/private key pair for a certain domain and store the credentials in the cloud along with the particular or selected life-time period.

In one or more embodiments, the cloud TEE 815 may only generate the public/private key pair when a certain RP 820 (or website, server) is accessed for the first time. In one example embodiment, the cloud TEE 815 may directly manage the credentials for a certain website directly on the secure storage 140 (FIG. 2) in the electronic device 120. In one or more embodiments, the user is able to access a service from any geographical location provided the cloud TEE 815 (cloud-based authenticator) is accessible.

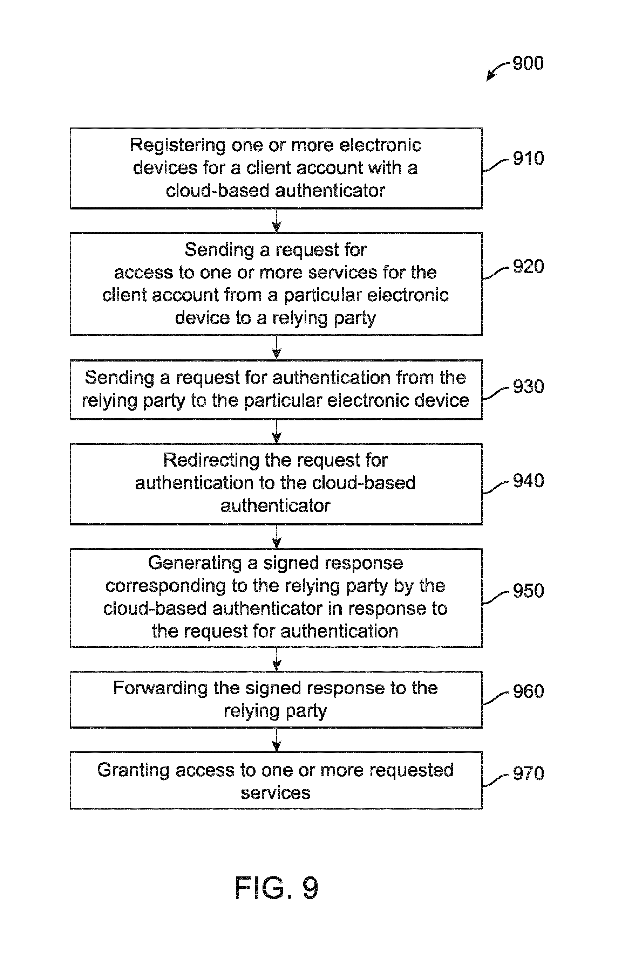

FIG. 9 shows a flowchart of an authenticator based authentication process 900, according to an embodiment. In one embodiment, in block 910 one or more electronic devices (e.g., electronic devices 120, FIG. 2) are registered for a client account for an RP or website with an authenticator (e.g., cloud-based authenticator 310, FIG. 3). In one embodiment, in block 920 a request for access to one or more services for the client account by a particular electronic device is sent to the RP. In one embodiment, in block 930 a request for authentication from the RP is sent to the particular electronic device. In one embodiment, in block 940 the request for authentication is redirected or forwarded to the authenticator.

In one embodiment, in block 950 a signed response corresponding to the RP is generated by the authenticator in response to the request for authentication. In one embodiment, in block 960 the signed response is forwarded to the RP (e.g., either directly from the authenticator or indirectly by the electronic device). In one embodiment, in block 970 access to the one or more requested services is granted by the RP.

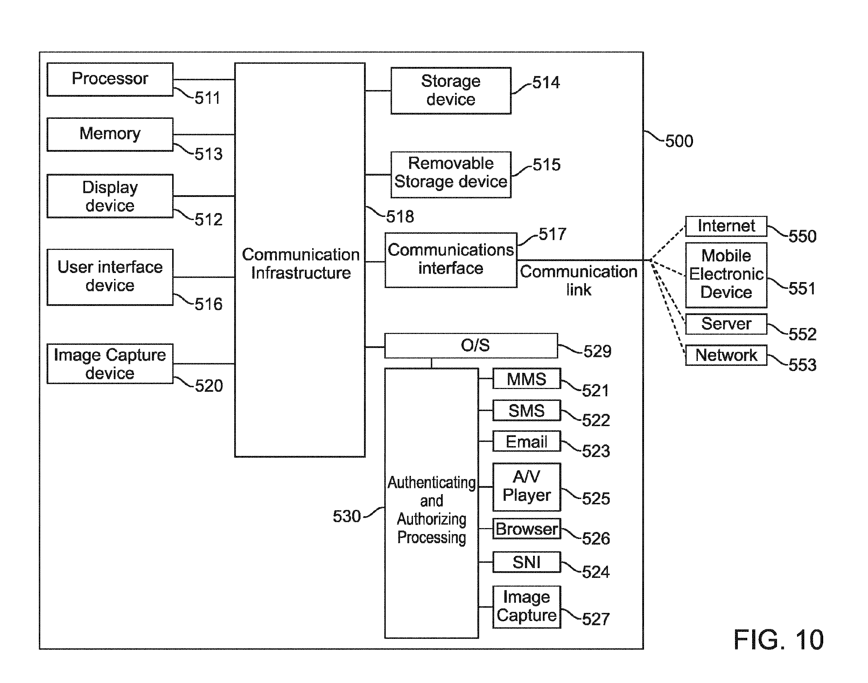

FIG. 10 is a high-level block diagram showing an information processing system comprising a computing system 500 implementing an embodiment. The system 500 includes one or more processors 511 (e.g., ASIC, CPU, etc.), and can further include an electronic display device 512 (for displaying graphics, text, and other data), a main memory 513 (e.g., random access memory (RAM)), storage device 514 (e.g., hard disk drive), removable storage device 515 (e.g., removable storage drive, removable memory module, a magnetic tape drive, optical disk drive, computer-readable medium having stored therein computer software and/or data), user interface device 516 (e.g., keyboard, touch screen, keypad, pointing device), and a communication interface 517 (e.g., modem, wireless transceiver (such as Wi-Fi, Cellular), a network interface (such as an Ethernet card), a communications port, or a PCMCIA slot and card). The communication interface 517 allows software and data to be transferred between the computer system and external devices. The system 500 further includes a communications infrastructure 518 (e.g., a communications bus, cross-over bar, or network) to which the aforementioned devices/modules 511 through 517 are connected.

The information transferred via communications interface 517 may be in the form of signals such as electronic, electromagnetic, optical, or other signals capable of being received by communications interface 517, via a communication link that carries signals to/from a plurality of sinks/sources, such as, the Internet 550, a mobile electronic device 551, a server 552, or a network 553, and may be implemented using wire or cable, fiber optics, a phone line, a cellular phone link, an radio frequency (RF) link, and/or other communication channels.

In one implementation, in a mobile wireless device such as a mobile phone, the system 500 further includes an image capture device 520 such as a camera 127 (FIG. 2). The system 500 may further include application modules, such as MMS module 521, SMS module 522, email module 523, social network interface (SNI) module 524, audio/video (AV) player 525, web browser 526, image capture module 527, etc.

The system 500 further includes an authenticating and authorizing processing module 530 as described herein, according to an embodiment. In one implementation of the authenticating and authorizing processing module 530 along with an operating system 529 may be implemented as executable code residing in a memory of the system 500. In another embodiment, such modules are in firmware, etc.

As is known to those skilled in the art, the aforementioned example architectures described above, according to said architectures, can be implemented in many ways, such as program instructions for execution by a processor, as software modules, microcode, as computer program product on computer readable media, as analog/logic circuits, as application specific integrated circuits, as firmware, as consumer electronic devices, AV devices, wireless/wired transmitters, wireless/wired receivers, networks, multi-media devices, etc. Further, embodiments of said Architecture can take the form of an entirely hardware embodiment, an entirely software embodiment or an embodiment containing both hardware and software elements.

One or more embodiments have been described with reference to flowchart illustrations and/or block diagrams of methods, apparatus (systems) and computer program products according to one or more embodiments. Each block of such illustrations/diagrams, or combinations thereof, can be implemented by computer program instructions. The computer program instructions when provided to a processor produce a machine, such that the instructions, which execute via the processor creates means for implementing the functions/operations specified in the flowchart and/or block diagram. Each block in the flowchart/block diagrams may represent a hardware and/or software module or logic, implementing one or more embodiments. In alternative implementations, the functions noted in the blocks may occur out of the order noted in the figures, concurrently, etc.

The terms "computer program medium," "computer usable medium," "computer readable medium", and "computer program product," are used to generally refer to media such as main memory, secondary memory, removable storage drive, a hard disk installed in hard disk drive. These computer program products are means for providing software to the computer system. The computer readable medium allows the computer system to read data, instructions, messages or message packets, and other computer readable information from the computer readable medium. The computer readable medium, for example, may include non-volatile memory, such as a floppy disk, ROM, flash memory, disk drive memory, a CD-ROM, and other permanent storage. It is useful, for example, for transporting information, such as data and computer instructions, between computer systems. Computer program instructions may be stored in a computer readable medium that can direct a computer, other programmable data processing apparatus, or other devices to function in a particular manner, such that the instructions stored in the computer readable medium produce an article of manufacture including instructions which implement the function/act specified in the flowchart and/or block diagram block or blocks.

Computer program instructions representing the block diagram and/or flowcharts herein may be loaded onto a computer, programmable data processing apparatus, or processing devices to cause a series of operations performed thereon to produce a computer implemented process. Computer programs (i.e., computer control logic) are stored in main memory and/or secondary memory. Computer programs may also be received via a communications interface. Such computer programs, when executed, enable the computer system to perform the features of the embodiments as discussed herein. In particular, the computer programs, when executed, enable the processor and/or multi-core processor to perform the features of the computer system. Such computer programs represent controllers of the computer system. A computer program product comprises a tangible storage medium readable by a computer system and storing instructions for execution by the computer system for performing a method of one or more embodiments.

Though the embodiments have been described with reference to certain versions thereof; however, other versions are possible. Therefore, the spirit and scope of the appended claims should not be limited to the description of the preferred versions contained herein.

## Claims

1. A method comprising:
registering one or more electronic devices for a client account for a relying party with an authenticator;
sending a request for access to one or more services for the client account by a particular electronic device to the relying party;
sending a request for authentication from the relying party to the particular electronic device;
redirecting the request for authentication to the authenticator;
generating a signed response corresponding to the relying party by the authenticator in response to the request for authentication;
forwarding the signed response to the relying party; and
granting access to one or more requested services.

2. The method of claim 1, wherein registering one or more electronic devices for the client account with the authenticator comprises storing a credential in secure storage of one or more electronic devices;
wherein the authenticator comprises a cloud-based authenticator or an authenticator that executes in a trusted execution environment (TEE).

3. The method of claim 2, wherein access of the credential is controlled through an authentication mechanism using the one or more electronic devices.

4. The method of claim 2, wherein a browser application used by the one or more electronic devices includes a processing element to inform the relying party of authentication support from the authenticator and a one-time password is generated each time the one or more electronic devices accesses the relying party for access to the one or more requested services, wherein the authenticator manages one or more unique identifiers associated with one or more client accounts at one or more websites, and each time the one or more client accounts are accessed, the one or more unique identifiers are presented from the authenticator to the one or more websites for user access.

5. The method of claim 4, wherein the one time password comprises a public key and private key pair, wherein the one or more electronic devices authenticates a user based on one or more of login information and biometric information, and the authenticator authenticates the one or more electronic devices based on the credential, wherein the one time password is transmitted directly from the authenticator or indirectly from the one or more electronic devices to the one or more websites.

6. The method of claim 5, wherein a challenge from a relying party in response to a request for service from a browser running on the one or more electronic devices is redirected to the authenticator, the authenticator generates a new public key and a private key pair, the authenticator generates a signed response to the challenge using the generated private key, and the relying party verifies the signed response using the generated public key, wherein the public key and private key pair is associated with a particular time period, and after said time period expires, the public key and private key pair become invalid.

7. The method of claim 1, wherein the one or more electronic devices each comprises one of a mobile phone device, a camera device, a tablet computing device, a laptop computing device and a personal computer (PC) device.

8. A system comprising:
an authenticator; and
an electronic device including a secure storage module, the electronic device registers for a client account for a relying party with the authenticator, sends a request for access to one or more services for the client account to the relying party, and redirects a request for authentication to the cloud-based authenticator, wherein the authenticator generates a signed response corresponding to the relying party in response to the request for authentication, and forwards the signed response to the relying party for the electronic device obtaining access to the one or more requested services.

9. The system of claim 8, wherein the electronic device stores a credential in the secure storage module registering with the authenticator, and the authenticator comprises a cloud-based authenticator or an authenticator that executes in a trusted execution environment (TEE).

10. The system of claim 9, wherein access of the credential is controlled through an authentication mechanism using the electronic device.

11. The system of claim 10, wherein a browser application used by the electronic device includes a processing element to inform the relying party of authentication support from the authenticator, and a one-time password is generated each time the electronic device accesses the relying party for access to the one or more services, wherein the authenticator manages one or more unique identifiers associated with one or more client accounts at one or more websites, and each time the one or more client accounts are accessed by the electronic device, the one or more unique identifiers are presented from the authenticator to the one or more websites for user access.

12. The system of claim 11, wherein the one time password comprises a public key and private key pair, wherein the electronic device authenticates a user based on one or more of login information and biometric information, and the authenticator authenticates the one or more electronic devices based on the credential, wherein the one time password is transmitted directly from the authenticator or indirectly from the electronic device to the one or more websites.

13. The system of claim 12, wherein a challenge from a relying party in response to a request for service from a browser running on the electronic device is redirected to the authenticator, the authenticator generates a new public key and a private key pair, the authenticator generates a signed response to the challenge using the generated private key, and the relying party verifies the signed response using the generated public key, wherein the public key and private key pair are associated with a particular time period, and after said time period expires, the public key and private key pair become invalid.

14. The system of claim 8, wherein the electronic device comprises one of a mobile phone device, a camera device, a tablet computing device, a laptop computing device and a personal computer (PC) device.

15. A non- non-transitory computer-readable medium having instructions which when executed on a computer perform the method of one of claims 1 to 7.
